Europäisches Patentamt

European Patent Office

Office européen des brevets

(11) Publication number: **0 296 092**
**A2**

(12) # EUROPEAN PATENT APPLICATION

(21) Application number: **88600004.1**

(22) Date of filing: **21.03.88**

(51) Int. Cl.⁴: **H 04 B 5/00**

(30) Priority: **19.06.87 GR 870964   02.11.87 US 115490**
**15.03.88 GR 88010015**

(43) Date of publication of application:
**21.12.88 Bulletin 88/51**

(84) Designated Contracting States:
**AT BE CH DE ES FR GB IT LI LU NL SE**

(71) Applicant: **Geladakis, George**
**13, Kastamonis St., 141-21 N. Iraklion**
**Athens (GR)**

(72) Inventor: **Geladakis, George**
**13, Kastamonis St., 141-21 N. Iraklion**
**Athens (GR)**

(74) Representative: **Goodopoulos, Christos**
**12, Spetson St.**
**113.62 Athens (GR)**

(54) **Arrangement for wireless earphones without batteries and electronic circuits, applicable in audio-systems or audio-visual systems of all kinds.**

(57) The present invention relates to an arrangement for wireless earphones applicable in audio - systems or audio - visual systems of all kinds.

The present invention overcomes the problem of the high construction, installation, operation, repair and maintenance cost of the wireless earphones of the prior art, due to the batteries and electronic circuits employed by the same, by means of a new system of wireless earphones without batteries and electronic circuits, whose operation is based on the inductive coupling between a space coil and an earphone coil, where the order of inductive coupling depends on the height of installation of the space coil, the circumferential length and number of turns of the two coils, the kind of used cores in the coils (air - or magnetic materials) and specific resistances of the materials used.

FIG 1

FIG 4

**Description**

**"ARRANGEMENT FOR WIRELESS EARPHONES WITHOUT BATTERIES AND ELECTRONIC CIRCUITS, APPLICABLE IN AUDIO - SYSTEMS OR AUDIO - VISUAL SYSTEMS OF ALL KINDS "**

THE FIELD OF THE INVENTION

The present invention relates to the field of the art of earphones and in particular to an arrangement for wireless earphones without batteries and electronic circuits, applicable in audio - systems of audio - visual systems of all kinds. The main characteristic of the "PATENT" is that the earphones need not batteries. The addition of electronic equipments in earphones for their improvement, in case batteries are not used, applies to the field of this "PATENT".

THE BACKGROUND OF THE INVENTION

The usage of earphones in the educational process, as well as in several other activities of every - day life, such as seminars, cruise ships, television, music, cars, aeroplanes etc. being carried out within confined rooms, has been broadly spread worldwide.

Nowadays, usage of earphones is basicaly made by the two below described ways.

1.- Earphones connected by means of certain leads to an emission source, e.g. tape recorder, audio - installations, stereos, etc. This system which prevailed for a long time entails the substantial disadvantage that the user is tied by these leads.

Wireless earphones which became applicable due to the need for a greater degree of freedom in movement, especially in connection with audio - visual teaching systems and in particular in Schools, where most pupils are children.

In this system, the source of emission of the sonar signal e.g. tape recorder, audio - installation, television, etc. is connected to a coil which surrounds the space within which the earphones are provided and within which they may move. The earphones are provided with arrangements which are capable of an inductive coupling reception of the sonar signal which is thereby led to an audio - frequency amplifier and following its amplification, it causes excitation of the loudspeakers. The disadvantages of this system are of a different nature, but they are equally serious ones:

a) The batteries required to operate the amplifier, especially when the earphones are used by children who often forget to switch off after usage, run out very quickly.

b) The electronic circuits combined with the batteries substantially increase the operation and maintenance cost and they reduce the reliability of these earphones to such an extent that in most cases their usage is abandoned.

The object of the present invention is to effectively overcome the abovementioned disadvantage and drawbacks of the prior art and provide an arrangement for wireless earphones without batteries and electronic circuits, applicable in audio - systems or audio - visual systems of all kinds.

The object of the invention is implemented with an arrangement for wireless earphones, the operation of which is based upon the inductive coupling of two coils. One of these coils is the space coil, which is the same as with the above described case of wireless earphones with batteries and electronic circuits and the other is the earphone coil. The question is, which must be the geometrical and quantitative dimensions of the two coils and what power must be transferred from the space coil, so that the power induced in the earphone coils will be sufficient to cause a sufficiently intense excitation of the earphone loudspeakers or of any means of conversion of the electrical oscillation to a sonar one.

In order to facilitate understanding of the invention, the following accompanying drawings depicting illustrative embodiments of the invention are attached here with:

Figure 1 shows a frontal view of the proposed wireless earphones without batteries, and electronic circuits, designed in accordance to an illustrative preffered embodiment of the invention.

Figure 2 shows a plan view of the proposed wireless earphones of Fig. 1.

Figure 3 shows an operation diagram of the wireless earphones of Figures 1 and 2, illustrating the connection of the earphone coil to the loudspeakers provided on either side.

Figure 4 shows an operation diagram of the wireless earphones of Figure 3, which is further provided with a rheostat regulating the intensity of the signal received at the loudspeakers.

Figure 5 shows a diagram of a room provided with suitable equipment to operate the proposed arrangement of earphones without batteries and electronic circuits.

ANALYTICAL DESCRIPTION OF THE INVENTION

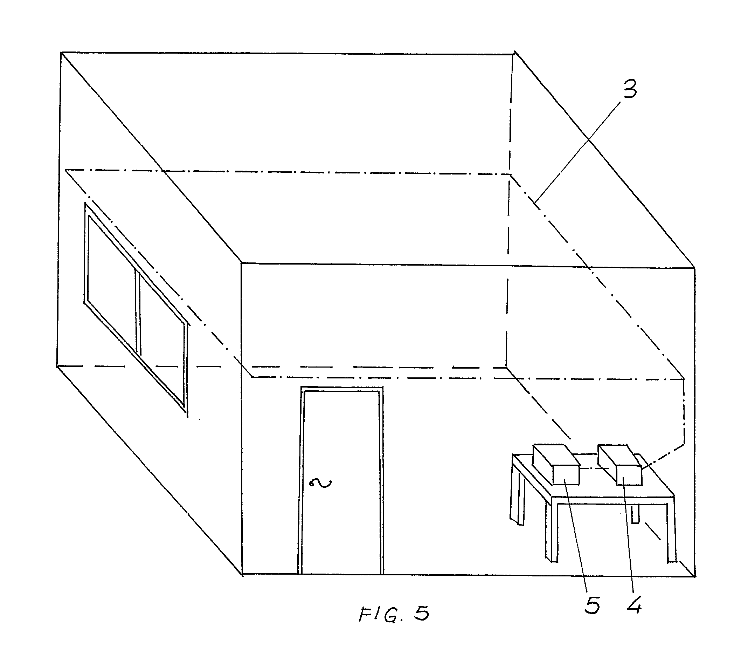

Reffering now to the accompanying drawings and in particular to Figure 5, we observe a linear diagram of a typical room within which a space coil 3 is installed, whose ends are in accordance to a preffered embodiment of the invention connected to the output of a preferably linear audio - frequency amplifier 4, whose output power must be of the order of at least 20 W. depending on the dimensions of the room.

2

Bellow there will be given detailed mathematical types for the output power of the Amplifier. The Amplifier should preferably be provided with an input signal power regulator, an arrangement for cutting off not necessary frequencies e.g. frequencies exceeding 8 - 10.000 Hertz and an arrangement to adapt the output characteristics of the audio signal emission source 5 to the amplifier's input. It must be noted that the signal is preferably received from the earphones output of the signal source. So that excisting signal sources can be used such as taperecorders, TV set, etc.

The amplifier 4 is connected to the sonar signal sources 5 which we want to hear at the wireless earphones. The sonar signal source 5 can be a taperecorder, an audio - installation, a television set, a microcomputer or other means of emission of a sonar signal.

But the power of the input signal must be the one needed by the final amplifier 4 to give forth its whole power.

The space coil 3 is installed in a circumferential (noose) arrangement round the room and it may comprise a few turns, e.g. four or more turns from common twisted cable, The total ohmic resistance of the space coil must not exceed 2 - 8 Ohm and must be such as to be adaptable to the output of the linear amplifier 4, which might be of the order of 2 - 8 Ohm. Coils with ohmic resistance exceeding 2 - 8 Ohm can be manufactured easily using common twisted cables with cross section of 0,5 mm, 0,75 mm, 1,0 mm, 1,5 mm etc. A suitable Watt power resistor of a low Ohmic resistance may be connected in series to the space coil to optimally adapt the latter to the amplifier's output. But this means loss of power and it must be avoided. A high ohmic resistance of the space coil results to high losses. The loudspeakers used can be the ordinary commercially available loudspeakers with a resistance of about the order of 2 - 8 Ohm and a power of 0,3 - 0,6 Watt at least. Loudspeakers of lower resistance, for example 4 Ohm are preferable.

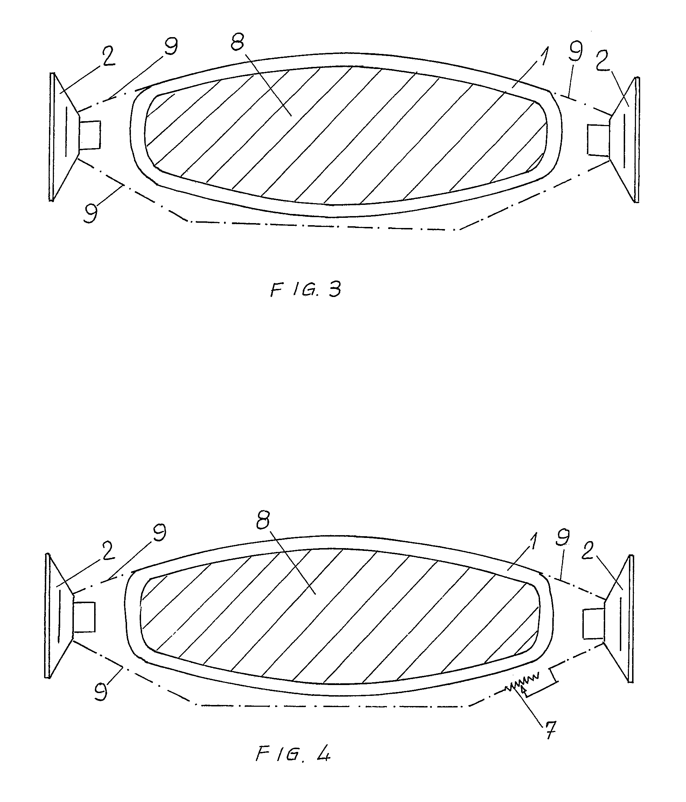

Reffering now to Figure 3, we observe the functional part of the wireless earphone, without its mechanical supporting parts. The earphone coil 1 is connected in series or in parallel to the two loudspeakers 2. The region of earphone coil 1 indicated by numeral 8 is the active coil surface i.e. the horizontally projected area of the curved coil. The larger the active surface 8 of the earphonh coil 1 and the larger the number of its turns increases without any increase of its ohmic resistance, the larger becomes the inductive coupling between the earphone coil 1 and the space coil 3. Nevertheless the geometrical dimensions of the earphones and its weight have to be limited, thereby limiting the dimensions of coil 1, which is by way of example, preferably made from copper wire of a diameter 0,3 -0,4 mm, comprising 150 - 180 turns with a circumferential coil length within a range from 40 - 50 cm.

The active surface of coil 1 without magnetic core ranges in a preferred range from 70 - 100 cm. Whereas its ohmic resistance is of the order of 10 - 15 Ohm. If a magnetic core is going to be used the dementions of the coil and the number of turns can be decreased.

A rheostat 7 or two (one for each loudspeakers) of the order of 150 - 180 Ohm may be connected in series to the coil 1 and the loudspeakers 2, to provide local adjustment of the intensity of the emitted signal, as shown in Figure 4.

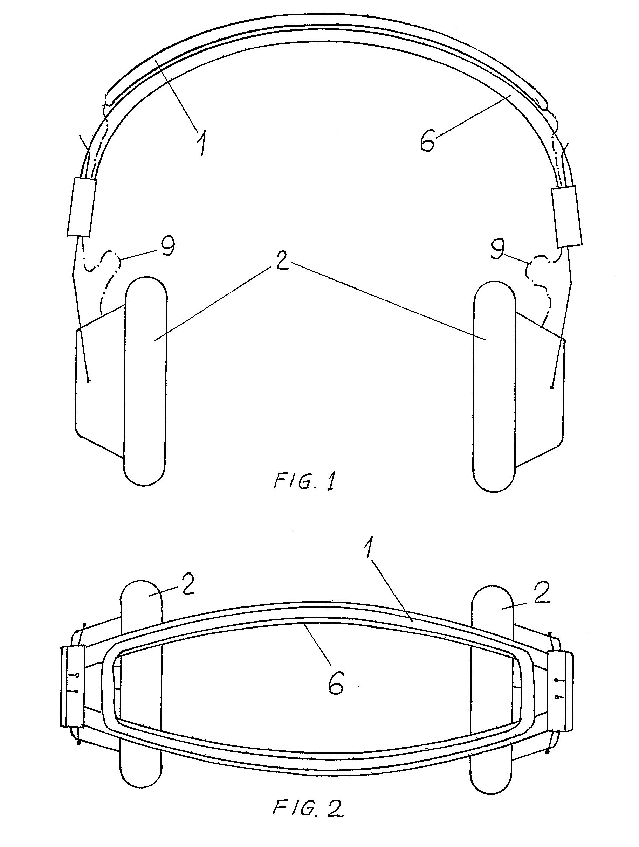

As illustrated in Figures 1 and 2 the proposed earphone coil 1, is mounted on to a suitable basement 6 of a desired form, where the leads 9 connecting the coil ends to the loudspeakers 2 pass through this basement. The coil may be also covered by a suitable plastic covering which is not shown in the drawings.

The ideal height of the space coil 3 is at the level of the earphones, so that the planes of the space coil and of the earphone coil may be parallel and at the same height, since this provides the largest possible inductive coupling between the two coils and there'll be required an amplifier of a lower power. In Figure 3, the space coil is located at a relatively high level above the level of door and window frames, but it may of course be located at a lower level and overcome the obstacles through a non - linear course.

The functionally active surface of the space coil 3 is the space inscribed by the same. We can naturally increase the order of inductive coupling between the space and the earphone coil through increasing the turns in both coils, whilst maintaining low Ohmic resistances at the abovementioned levels, in order to avoid ohomic losses.

The amplifier 4 may be any amplifier e.g. a tape recorder with an output power of the order of at least 20 Watt, whose output is instead of the loudspeakers, connected to the space coil 3. However the usage of an independent amplifier, enables usage of any audio-frequency sources of different power, e.g. the earphones output from small tape recorders, audio - installation, etc. In general, the amplifier 4 may have an input resistance adaptable to the output resistance of the sonar signal source 5 for avoiding destortions.

Anternatively it is of course possible to ommit the proposed amplifier 4 and adapt the space coil 3, directly to the audio signal source 5. This naturally presupposes that the said audio signal source 5 has, as described above the sufficient power and capability to be connected to the elements of the space coil 3.

PRACTICAL APPLIANCE OF THE "PATENT"

In accordance to BIOT and SAVART LAW the intensity of the magnetic field at acertain point of the space, surrounded by a space coil, is derived by the total of the intensity of all parts of the space coil in this point. To make it simpler, we think of the space coil as a rectangular parallelogram, and the point of our calculations to be in the centre of the plane of the rectangular parallelogram coil.

$$H = \frac{2 \cdot N \cdot I}{\Pi} \cdot \sqrt{\frac{1}{\alpha^2} + \frac{1}{\beta^2}} \qquad\qquad N \cdot I = \frac{H \cdot \Pi}{2 \cdot \sqrt{\frac{1}{\alpha^2} + \frac{1}{\beta^2}}} \qquad (I)$$

H = the intensity of the magnetic field in ABER/M (A/M)

N = the number of turns of the space coil

I = the coil current in ABER (A) is the same, with the Peak load current $I_o$ of the power Amplifier.

$\pi = 3,14$

$\alpha$ and $\beta$ = the lengths of the sides of the rectangular space coil in meters (m).

While in use of the "PATENT" until now, there has been proved that the magnetic intensities H = 6 ÷ 8 are quite satisfactory for earphone coil without magnetic core.

We usually choose H = 7 A/M

of course we can choose even H = 10 A/M or more.

The output power $P_o$ in Watt (W) of an Amplifier on row of AB or B attached to the greatest intensity of the output current $I_o$ (A) and the load resistance $R_L$ (ohm) is given by the relation.

$P_o = 1/2 \cdot I_o^2 \, R_L$    (II)

In types (I) and (II) free changeables are:

"$P_o$", "$R_L$", "$I_o$", "N"

As a conclusion of the above we say that for less power, there is needed more output current and many turns of the space coil 3.

EXAMPLES OF APPLIANCE

EXAMPLE 1o:

$$\text{Space } 3 \text{ X } 4 \text{ m} = 12 \text{ m}^2 \qquad\qquad \sqrt{\frac{1}{\alpha^2} + \frac{1}{\beta^2}} = 0,4166$$

We choose H = 6 A/M

From type (I) : N . $I_o$ = (6 . 3,14) : (2 . 0,4166) = 22,6 A.N

Amplifier with real output power:

W = 20 Watt and load resistance $R_L$ = 2 Ohm

From type (II) : $I_o$ = (2 . 20) : 2 = 4,47 A

Turns of coil : N . $I_o$ = 22,6 — N = 22,6 : 4,47 = 5,05

We choose N = 6

Manufacturing of the space coil with 6 turns and ohmic resistance RL $\geqq$ 2 Ohm. (The coil must not be bigger than 2 ohm because there will be loss of power).

Space Circumference : (2 . 3) + (2 . 4) = 14 m.

Total length of the coil conductor = turns X Circumference:

6 X 14 = 84 meters.

We add even a 5% ÷ 6% for any ZICK - ZACK ≈ 6 meters L = 84 + + 6 = 90 m.

Choice of cross section : conductor with cross section (cutting) 0,75 mm² has 2,38 ohm resistance in a distance of 100 meters. $R_L$ = 2,38 . 0,9 = 2,14 ohm.

The real intensity of the magnetic field with the real load resistance $R_L$ = 2,14 Ohm is:

TYPE (II)    $I_o$ = 4,32 A

TYPE (I)    H = (2 . 6 . 4,32 . 0,4166): 3,14 = 6,87 A/M.

NOTES

(i) While choosing the conductors for the coil making, we must have in mind the allowed current intensity of the conductor, so that it hasn't to be warmed. Even the Compound Resistance.

(ii) For achieving the desirable space coil resistance we can make it, using two different cross sections, or to increase the number of turns, or both of them.

(iii) The calculated output power of the Amplifier must be given forth as it really is, without any transformations otherwise the intensity of the magnetic field will be very low, having as a result the low acoustic intensity of the earphones.

Even the input signal of the Amplifier must be strong enough in case we want the Amplifier to produce its

4

whole in tensity without any tranformations.

(iv) If we want the Amplifier not to functionate in its greatest output power it is preferable to choose an Amplifier of $10 \div 20\%$ greater power than the one needed.

EXAMPLE 2o:

The same effects with the example 1o but with output load resistance of the Amplifier $R_L = 4$ Ohm.

$I_o = 3,16$ A N $= 22,6 : 3,16 = 7,08$ We choose 8 turns

Total lenght of coil conductor:

$L = 8 . 14 + 6\%$ L $= 112 + 8 = 120$ m.

Each turn of the coil is 15 m.

We can make the coil in 7 turns, cross section 0,5 mm$^2$ and resistance $(15 . 7 . 3,58) : 100 = 3,75$ ohm, and one turn with cross section 0,75 mm$^2$ and resistance $(15 . 1 . 2,38) : 100 = 0,35$ Ohm and total coil $3,75 + 0,35 = 4,1$ ohm,

or 8 turns with cross section (cutting) 0,5 mm$^2$ and total resistance $(120 . 3,58): 100 = 4,3$ ohm.

The real intensity of the magnetic field is calculated as in the first example.

EXAMPLE 3o:

A classroom 6 X 4 m $= 24$ m$^2$

$$H = 7 \text{ A/M,} \quad \sqrt{1/\alpha^2 + 1/\beta^2} = 0,3$$

We choose resistance of space coil $R_L = 4$ ohm and N $= 8$ turns and we calculate the Amplifier:

Type (I)

$I_o$ N $= (7 . \Pi) : 2 . 0,3 = 36,6$ AN

$I_o = 36,6 : 8 = 4,57$ A

Type (II)

$P_o = 1/2 \; I_o^2 . RL = 1/2 . 4,57^2 . 4 = 41,77$ Watt

We choose $P_o = 50$ Watt.

Calculation of the coil.

Circumferential length of the room: $(2 . 6) + (2 . 4) = 20$ m.

Total length of the conductor coil $= 8 . 20 + 5\% . L \approx 170$ m.

Conductor 0,75 mm$^2$ — $R_L = 2,38 . 1,7 = 4,04$ ohm.

From type (II) : $I_o = 4,97$ A

From type (I) : H $= (2 . 8 . 4,97 . 0,3) : 3,14 = 7,59$ A/M

EXAMPLE 4o:

Classroom 6 . 8m $= 48$m$^2$,

$$\sqrt{1/\alpha^2 + 1/\beta^2} = 0,208$$

H $= 8$ A/M, $R_L = 4$ ohm, Amplifier 100 Watt

$I_o$ . N $= (8 . 3,14) : (2 . 0,208) = 60,38$

$I_o = 7,07$ A — N $= 60,38 : 7,07 = 8,54$ turns

We choose 9 turns.

Total length of the conductor space coil:

Circumference $= (2 . 6) + (2 . 8) = 28$ m. L $= 9 . 28 + 5\% = = 252 + 13 = 265$ m.

Lenght of one turn $= 29,5$ m.

We make 6 turns with cutting 1,0 mm$^2$     R1 $= 3,16$ ohm

We make 3 turns with cutting 1,5 mm$^2$     R2 $= 1,05$ ohm

$R_L = 3,16 + 1,05 = 4,21$ ohm

$I_o = 6,89$ A and H $= (2 . 9 . 6,89 . 0,208) : 3,14 = 8,21$ A/M

NOTES

Instead of making 3 turns of 1,5 mm$^2$, we can make one part of the coil with cross section 1,5 mm$^2$, as the total of the lenght of the conductors may be equal to 3 turns. This is very important, because space coil is usually made of wires which include the conductors. e.g.:Wire with 9 conductors and lenght $28 + 5\% = 29,4$

m
thus
0,666 . 29,4 = 19,60 m., with conductor cutting 1,0 mm$^2$.
0,334 . 29,4 = 9,80 m, with conductor cutting 1,5 mm$^2$.

We can also use more output amplifiers having the same charasteristics. These amplifiers will have common input signal and independant among themselves space coils for loads in their output.

This can basically be used in large rooms of meetings, lectures, museums, etc. where the output power of the Amplifiers will be of some hundred Watt or even thousands Watt, because by this way we can make the total coil of some coils with smaller cross sections.

For stereo Amplifiers we must install two independable space coils for each channel.

Another alternating appliance of the "PATENT" is the use of table - service space coil of small dementions e.g. round with diameter 10 ÷ 30 cm, instead of the Circumferential space coil N. 3, as it is below described, applying even here the BIOT and SAVART LAW.

Round coil with radius r and N turns. In a distance L(m) from the level of the coil counted it on the axis which passes through the centre of the round coil the magnetic field intensity is:

$$ H = \frac{1}{2} \frac{N \cdot I_o \cdot r}{(r^2 + 1^2)} \qquad (A/M) \qquad\qquad (III) $$

Here it is evident that we need great (N . $I_o$) and small distances in order to have satisfactory H. e.g. Round coil with middle radius 0,07 m.

Cross - section conductor 0,5 mm$^2$ and N = 260 turns, this will have an Ohmic Resistance $R_L$ = 4,1 ohm.
Amplifier 20 Watt : $I_o$ = 3,12 A
In a distance of 2 meters from its axis it will have:
H max = 7,11 A/M
In a distance of 2,5 meters     H max = 4,55 A/M and
in a distance 3,0 meters     H max = 3,16 A/M

The disadvantages here are three:
a) The direction of the coil.
b) The intensity of echo in the earphones is increased and decreased alternately according to the distance from the coil.
c) The thick enough coil.

If half of the coil is used, causing to the test half magnetic ironclad, so that magnetic fields are not to be substructed, then, we are going to have good results to the point of direction. Of course the shape of the coil may be of any kind.

The local coil with the Amplifier can be placed anywhere in the space, and the acoustic signal has to pass either through the current wires e.g. with system that "NATIONAL" has to use for this purpose to LM1893 and the MM53200, or with INFRAROT transmitting apparatus.

In spaces which surround spherical the space where N 3 space coil is found, there happens loosen inductive coupling in any by chance found there amplifiers of acoustic frequencies and generally to conductors which are not magnetically ironclad, for example, telephone wires etc.

Outside the level which surrounds the circumferential coil and in a distance from one side of the coil equal to the half that it has to its opposite side, the intensity if the magnetic field is lessened about 3 times from the intensity the coil has in its centre (because out of space coil the magnetic fields are substracted).

In a distance similar to the distance of the two parallel sides the intensity is lessened at about 9 times, that is with 7 as a basis it becomes 0,75 A/M about.

The same can happen in distances of level above and under the level of the coil.

From all the above mentioned and the practical appliance by now, we came to the understanding that for nearly small spaces the influence is the minimum, while the more the demensions of the space Increase, the more the space where the influence of the magnetic field is, increases too.

Of course the influence of the space coil N 3 in neighbouring spaces can be lessened to Zero (0) by making a full or half full magnetic ironclad of the space where we have established the coil, by using some magnetic material (the magnetic material is necessary because of low frequencies), or by using ironclad leads for use of acoustic frequencies in surrounding spaces.

The proposed system of wireless earphones without batteries and electronic circuits has already been studied,designed and succesfully tested. Several audio - visual educational means, selfmade preamplifiers and amplifiers were used in the tests as well as commercially available materials such as the amplifier SMART KIT 1041 made in Greece, of 25 W and output resistance of 2 - 8 Ohm and the amplifier No 1077 of 100 Watt of the same Company with R = 8 Ohm output resistance.

The seamplifying arrangement of an audio - signal were used in connection to several audio signal sources, in rooms ranging from 12 to 40 mm into which there was installed a space coil of 0,75 and 1 mm$^2$. Wireless earphones were used, employed a coil made from 0,35 mm diameter copper wire, circumferential lenght of 40 and 46 cm and active surface 70 and 80 mm². And loudspeakers of 8 Ohm, 0,3 ÷ 0,5 and over Watt of common market.

The test results were excellent and the signal power so high that it became necessary to use an earphonesrheostat to regulate the intensity of the emitted signal.

The proposed, invented system of wireless earphone without batteries and electronic circuits can be used in the entire spectrum of earphone applications, ranging from a self hearing of an audio -frequency source (such as radio, T.V., etc.) up to the hearing by a plurality of persons in rooms where congressor seminars are conducted, meeting rooms, schools etc.

The merits of eliminating usage of batteries and electronic accessories is obvious, both by the point of view of cost of manufacturing and operation, as well as by side of the increased reliability in the operation, of the arrangement due to the elimination of malfuctions 95% which are due to the provided batteries and electronic circuits and result to the earphones being practically non applicable with young children. The application of the invented wireless earphones eliminates the otherwise frequent requirement for service and repair by skilled personnel and can be installed and used by anyone.

It must hereby be noted that the description of the invention was made by reference to an illustrative and non - confining embodiment. Thus any change or amendement related to the shape, size, dimensions, form, characteristics, materials and accessories of construction, as long they do not compromise a new inventive step, are considered as being part of the purposes and the aims of the present invention.

## Claims

1.- Arrangement for wireless earphones applicable in audio -systems of audio - visual systems of all kinds, in rooms where a space coil connected to an audio - signal source is installed, characterized by that said wireless earphones do not include batteries and electronic circuits but only a coil for inductive coupling to the space coil connected to a means for conversion of the electric oscillation to a sonar oscillation where for each unit of tranferred power the order of inductive coupling with the said coil of each wireless earphone to the said space coil depends on the geometrical dimensions of the space, and the height of installation of the said space coil the geometrical dimensions and the specific resistances of the said earphone coil and the said space coil.

2.- Arrangement for wireless earphones without batteries and electronic circuits applicable in audio - systems or audio - visual systems of all kinds, in accordance to the above claim 1, where the height of installation of the said space coil is the desired usual level of usage of the said wireless earphones.

3.- Arrangement for wireless earphones without batteries and electronic circuits applicable in audio - systems or audio - visual systems of all kinds, in accordance to the above claim 1, characterized by that comprises an audio - signal amplifier connected in between the said space coil and the said audio - signal emmission source.

4.- Arrangement for wireless earphones without batteries and electronic circuits applicable in audio - systems or audio - visual systems of all kinds, in accordance to the above claim 3, characterized by that the said audio - signal amplifier has an output resistance adaptable to the resistance of the said space coil.

5.- Arrangement for wireless earphones without batteries and electronic circuits applicable in audio - systems or audio - visual systems of all kinds, in accordance to above claim 3, characterized by that the said audio - signal amplifier has an input resistance adaptable to the output resistance of the said audio - signal source.

6.- Arrangement for wireless earphones without batteries and electronic circuits applicable in audio - systems or audio - visual systems of all kinds, in accordance to above claim 1, characterized by that the said means of conversion of the electric oscillation to a sonar oscillation are earphones loudspeakers.

7.- Arrangement for wireless earphones without batteries and electronic circuits applicable in audio - systems or audio - visual systems of all kinds, in accordance to above claim 1, characterized by that a rheostat regulating the intensity of emission of the audio - signal is connected between the said coil of each earphone and the said loudspeakers of the same.

8.- Arrangement for wireless earphones without batteries and electronic circuits, applicable in audio - systems or audio - visual systems of all kinds, in rooms where a space coil has been installed, characterized by that it comprises an audio - signal amplifier with an output resistance adapted to the resistance of the space coil and an input resistance adapted to the output resistance of an audio -signal source, where the suitably reinforced audio - signal is transmitted to all the wireless earphones within the said room, and where each of the said wireless earphones is provided with a coil for effecting an inductive coupling to the said space coil.

9.- Arrangement for wireless earphones without batteries applicable in audio - systems or audio - visual systems of all kinds, with difference from claim 1, that the earphones can be used with the help of electronic equipments for improvement of their capasity.

10.- Arrangement for wireless earphones without batteries applicable in audio - systems or audio - visual systems of all kinds, according to the above claim 1 and 2, that the earphone coil must have magnetic core for better magnetic coupling.

11.- Arrangement for wireless earphones without batteries applicable in audio - systems or audio - visual systems of all kinds, characterized by the fact that the space coil 3 may have any shape, size, and form.

12.- Arrangement for wireless earphones without batteries applicable in audio - systems or audio - visual systems of all kinds, according to the above claim 10, characterized by the fact that the space coil N 3 is not circumferential placed in a restricted space but it has small geometrical demensions (of any form) and it can be applied to any part of the restricted space for local listening.

13. Arrangement for wireless earphones without batteries applicable in audio - systems or audio visual systems of all kinds, characterized by the fact that the above said amplifier can be built into any kind of audio, or audio - visual machines or systems (e.g. tape recorders, televisions sets, projectors, etc.).

14.- Arrangement for wireless earphones without batteries applicable in audio or audio - visual systems of all kinds, according to the above claim 13, characterized by the fact that the audio or audio - visual machines which are proferty made in order to be attached to the system operation, can be put in operation (for the systems) locally or by telecontrol.

15.- System for wireless earphones without batteries and electronic circuits applicable to audio or audio - visual systems of any kind, characterized by the fact that the space coil 3 can be used by multistrand conductors, the stands of which can be electrically insulated between themselves for less loss of Foucault Currents

0296092

FIG. 1

FIG. 2

F IG. 3

F IG. 4

0296092

FIG. 5